# EUROPEAN PATENT APPLICATION

(11) **EP 2 525 286 A1**
(43) Date of publication of application: **21.11.2012**
(21) Application number: 11166449.6
(22) Date of filing: 17.05.2011
(51) Int. Cl.: G06F 9/38, G06F 9/30

(54) **Co-processor interface**

(71) Applicant: NXP B.V., 5656 AG Eindhoven (NL)
(72) Inventor: Malzahn, Ralf, 5656, AG Eindhoven (NL)
(74) Representative: Krott, Michel

(57) **Abstract**

A data processing unit (101) for interacting with a co-processor (102) is provided. The data processing unit is coupleable with the co-processor providing at least one functionality. The data processing unit comprises a memory (120) having at least a code address space (121), and a monitoring unit (110) for monitoring a predefined portion of the code address space, wherein at least one address of the predefined portion of the code address space is dedicated to the at least one functionality. The data processing unit is adapted to use a jump instruction (123) to jump to the at least one address of the predefined portion of the code address space, and the monitoring unit is adapted to detect the jump to the at least one address of the predefined portion of the code address space and is further adapted to interact with the co-processor providing the at least one functionality.

## Description

### FIELD OF THE INVENTION

The invention relates to a data processing unit for interacting with a co-processor.

Furthermore, the invention relates to a data processing system.

Moreover, the invention relates to a method of interacting between a data processing unit and a co-processor.

Beyond this, the invention relates to a program element.

Furthermore, the invention relates to a computer-readable medium.

### BACKGROUND OF THE INVENTION

In the field of central processing units (CPU), for instance RISC CPUs (*Reduced Instruction Set Computer*), co-processors are used to provide and handle further functionalities. A co-processor can be very useful to support a dedicated functionality which is difficult or lengthy to implement in software on the CPU (for instance a calculation of the DES encryption standard). To operate these co-processors, interfaces between the CPU and the co-processors can be used. Especially small, highly optimized RISC CPUs often do not contain a dedicated interface to coprocessors, whereas more powerful CPUs like a MIPS 4K have dedicated interfaces for coprocessors.

EP 1 001 335 A1 discloses a data processing unit comprising a register file, a memory, a plurality of execution units, a pipeline configuration for processing instructions having a fetch stage for fetching an instruction from said memory, a decode stage for decoding an operational code from said instruction, an execution stage for activating one of said execution units, and a write-back stage for writing back from said execution unit, a coprocessor interface for coupling at least one coprocessor. The data processing unit has read- and write-lines coupling said register file with said coprocessor for exchanging operands, at least one control line indicating that said coprocessor is busy, a plurality of control lines from said decode stage for controlling said coprocessor which are operated upon detection of a coprocessor instruction, whereby said coprocessor is using said registers from said register file during execution of a coprocessor instruction.

US 5,420,989 A discloses a coprocessor comprising a bus controller which further comprises a primary bus controller and a secondary bus controller that drive a floating point processor core. The primary bus controller comprises a memory mapped bus interface for processing memory mapped format instructions and an I/O bus interface for processing conventional I/O format instructions.

Accessing a co-processor from a RISC CPU without a dedicated co-processor interface normally means to implement the co-processor memory mapped into the address space and to access it with load and store instruction. This leads to a relatively much code needed to use the co-processor.

### OBJECT AND SUMMARY OF THE INVENTION

Hence, it is an object of the invention to provide a data processing unit providing a reduction of needed code to use the coprocessor and saving execution time.

The object of the invention is achieved by a data processing unit, a data processing system, a method, a program element and a computer-readable medium according to the independent claims.

According to an exemplary embodiment, a data processing unit for interacting with a co-processor is provided. The data processing unit is coupleable with the co-processor providing at least one functionality. The data processing unit comprises a memory having at least a code address space, and a monitoring unit for monitoring a predefined portion of the code address space, wherein at least one address of the predefined portion of the code address space is dedicated to the at least one functionality, wherein the data processing unit is adapted to use a jump instruction to jump to the at least one address of the predefined portion of the code address space, and wherein the monitoring unit is adapted to detect the jump to the at least one address of the predefined portion of the code address space and is further adapted to interact with the co-processor providing the at least one functionality.

According to a further exemplary embodiment, a data processing system is provided, which comprises a data processing unit having the above mentioned features, and a co-processor being coupleable to the data processing unit.

According to another exemplary embodiment, a method of interacting between a data processing unit and a co-processor is provided, wherein the data processing unit is coupable with the co-processor providing at least one functionality. The method comprises monitoring, by a monitoring unit, a predefined portion of a code address space of a memory of the data processing unit, wherein at least one address of the predefined portion of the code address space is dedicated to the at least one functionality, using a jump instruction to jump to the at least one address of the predefined portion of the code address space, detecting, by the monitoring unit, the jump to the at least one address of the predefined portion of the code address space, and interacting with the co-processor providing the at least one functionality.

According to a further exemplary embodiment, a computer-readable medium (for instance a CD, a DVD, a USB stick, a floppy disk or a harddisk) is provided, in which a computer program is stored, which computer program, when being executed by a processor, is adapted to carry out or control the method having the above mentioned features.

According to a further exemplary embodiment, a program element (for instance a software routine, in source code or in executable code, for instance a downloadable program) is provided, which program element, when being executed by a processor, is adapted to carry out or control the above mentioned method.

Data processing which may be performed according to embodiments of the invention can be realized by a computer program, that is by software, or by using one or more special electronic optimization circuits, that is in hardware, or in hybrid form, that is by means of software components and hardware components.

In the following, embodiments of the invention will be described in further detail.

Common data processing units uses a co-processor interface for communicating with a co-processor. Especially small, highly optimized RISC CPUs often do not contain a dedicated interface to coprocessors. A co-processor can be very useful to support a dedicated functionality which is difficult or lengthy to implement in software on the CPU. Accessing a co-processor from a RISC CPU without a dedicated co-processor interface normally means to implement the co-processor memory mapped into the address space and to access it with load and store instruction.

As example, accessing the memory mapped co-processor will be shown under the following assumption (with 1 word =32 bit):
- two word input to the coprocessor
- writing another byte into a control register starts the coprocessor with selected function
- co-processor needs only very short amount of time for calculation (-some clock cycles)
- result consists also of two words

If the two input parameters are present in registers of the CPU they need to be written into the memory mapped input registers of the co-processor. Finally the two result words need to be read back into the registers of the CPU. So in total such a code might need a relatively high amount of bytes of code and also a relatively high amount of cycles on top of the calculation time of the co-processor.

According to exemplary embodiments as mentioned herein, instead of implementing memory mapped control registers, a co-processor functionality may be selected by jumping to a dedicated location in the code address space. Some bits of the address may be used to select a functionality of the co-processor, therefore a control register becomes obsolete.

The co-processor may be implemented also as a memory mapped device, but instead of using the 1/0-memory range, it may be mapped into the code space. Now it may be "called" by jumping to a dedicated address as if at this address a standard C-function is located. The monitoring unit may observe this jump and handle the function of the co-processor accordingly.

The term "data processing unit" may denote the central processing unit. In another embodiment, the central processing unit may be part of the data processing unit. The data processing unit may be for example a RISC CPU.

The term "co-processor" may denote any kind of common co-processor providing a functionality, i.e. an amount of instructions, being handled within the co-processor instead of within the data processing unit.

The term "memory" may denote a common memory used in a data processing unit comprising for example a code address space and a data address space. The data processing unit may further comprise a memory mapped I/O, as commonly being used for memory mapped devices.

The term "monitoring unit" may denote any hardware implementation providing the above mentioned features. The monitoring unit may be part of the central processing unit, which may also be part of the data processing unit. The monitoring unit may for example detect a jump instruction by comparing the current address on a bus of the data processing unit (or the central processing unit) with a stored (fix) address. In case the addresses are equal, the address may be detected as being a jump instruction for activating a co-processor. Then, the monitoring unit may output a digital signal to the co-processor. The comparison may be done by using XOR gates on bit level.

The term "address of the code address space" may denote any address in the code address space of the memory. A part of the address may be used to choose a (sub)function of the co-processor, for example by using the least significant bits, and a part of the address, for example the most significant bits, may be used for activating the mechanism of using a co-processor.

The term "jump instruction" may denote an instruction for jumping to a specific place in the memory. The jump instruction might be a part of the code for using the data processing unit. The jump instruction, i.e. the start of the co-processor operation, and therefore the co-processor operation as a whole may as a result look from the CPUs point of view as a normal function call.

Thus, the code size may be reduced which is needed to execute a coprocessor call. Interfacing to the co-processor may be as easy as calling a function in C for example (no dedicated instructions might be needed).

In the following, further exemplary embodiments of the data processing unit will be explained. However, these embodiments also apply to the data processing system, to the method, to the program element and to the computer-readable medium.

A plurality of addresses of the predefined portion of the code address space may be dedicated to a plurality of functionalities being provided by the co-processor, wherein the data processing unit may be adapted to use a jump instruction to jump to a specific address of the predefined portion of the code address space for starting a specific one of the plurality of functionalities.

Different co-processors may be coupleable to the data processing unit by dedicating specific addresses of the code address space to specific co-processors. In the same way, a plurality of functionalities of one co-processor may be chosen by the data processing unit by dedicating specific functionalities of one co-processor to specific bits of the dedicated address of the code address space. Also several co-processors may be coupleable to the data processing unit by dedicating specific co-processors to specific addresses of the code address space.

The monitoring unit may be adapted to interact with the co-processor by writing symbols to the memory of the data processing unit and/or by loading symbols from the memory of the data processing unit and by forwarding symbols to the co-processor and/or by receiving symbols from the co-processor.

A specific part of the memory may be used for storing input parameters or incoming results of the co-processor.

The symbols may represent input parameters for the functionality of the co-processor and/or result data received from the co-processor as results of the functionality.

The data processing unit may further comprise a register file, wherein the monitoring unit may be adapted to interact with the co-processor by writing symbols to the register file of the data processing unit and/or by loading symbols from the register file of the data processing unit and by forwarding symbols to the co-processor and/or by receiving symbols from the co-processor.

Some CPU or data processing unit registers may be used to hand over parameters and return results in the same way as they are used by standard C-function calls. Input parameters and return result may be ideally transferred in hardware directly to and from the CPU registers. The operation of the co-processor may be faster as the operation of a memory mapped co-processor as some store instructions for the parameters are obsolete, instead the hardware or monitoring unit may access values from several CPU registers in parallel. It may also be possible to return the result (from the co-processor) directly into the CPU registers.

The symbols may represent input parameters for the functionality of the co-processor and/or result data received from the co-processor as results of the functionality.

The data processing unit may further comprise a central processing unit being coupled with the memory. In this embodiment, the monitoring unit may be adapted to interact with the central processing unit on the one hand and with the co-processor on the other hand, for example for transmitting symbols from the co-processor to a register file of the central processing unit or vice versa. In this case, the register files as mentioned above may be part of the central processing unit.

The data processing unit may be coupleable via data and address buses to the co-processor. The data and address buses may be common buses as used for a CPU.

The aspects defined above and further aspects of the invention are apparent from the examples of embodiment to be described hereinafter and are explained with reference to these examples of embodiment.

### BRIEF DESCRIPTION OF THE DRAWINGS

The invention will be described in more detail hereinafter with reference to examples of embodiment but to which the invention is not limited.
Fig. 1 illustrates a data processing unit according to an exemplary embodiment of the invention.
Fig. 2 illustrates a data processing unit according to a further exemplary embodiment of the invention.

### DESCRIPTION OF EMBODIMENTS

The illustration in the drawing is done schematically. In different drawings, similar or identical elements are provided with the same reference signs.

Accessing a co-processor from a RISC CPU without a dedicated co-processor interface normally means to implement the co-processor memory mapped into the address space and to access it with load and store instruction.

As an example, the following assumption will be explained (with 1 word = 32 bit):
- two word input to the coprocessor
- writing another byte into a control register starts the coprocessor with selected function
- co-processor needs only very short amount of time for calculation (-some clock cycles)
- result consists also of two words

If the two input parameters are present in registers of the CPU they need to be written into the memory mapped input registers of the co-processor. For instance, for a common reduced instruction set computer (RISC) the assembler corresponding code can look as follows (based for instance on an ARM Cortex M0). The numbers of bytes and cycles are given in the following are the bytes needed for each instruction in the code memory and the number of instruction cycles taken by this instruction.

| | |
|---|---|
| LDR r3,[pc,#<offset>] | ; to get the address of the registers, 2 bytes, 1 cycle |
| STR r0,[r3,#<offs1>] | ; store 1st input word, 2 bytes, >= 1 cycle |
| STR r1,[r3,#<offs2>] | ; store 2nd input word, 2 bytes, >= 1 cycle |

To get the value for the control register into the co-processor:

| | |
|---|---|
| MOVS r2, #<value> | ; set value for control register, 2 bytes, 1 cycle |
| STR r2, [r3,#<offs3>] | ; store for control register, 2 bytes, 1 cycle |

Finally the two result words need to be read back into the registers of the CPU:

| | |
|---|---|
| LDR r0, [r3, #10] | ; load 1st result word, 2 bytes >=1 cycle |
| LDR r1, [r3, #10] | ; load 2nd result word, 2 bytes >=1 cycle |

So in total this piece of code needs 14 bytes of code and at least seven cycles on top of the calculation time of the co-processor.

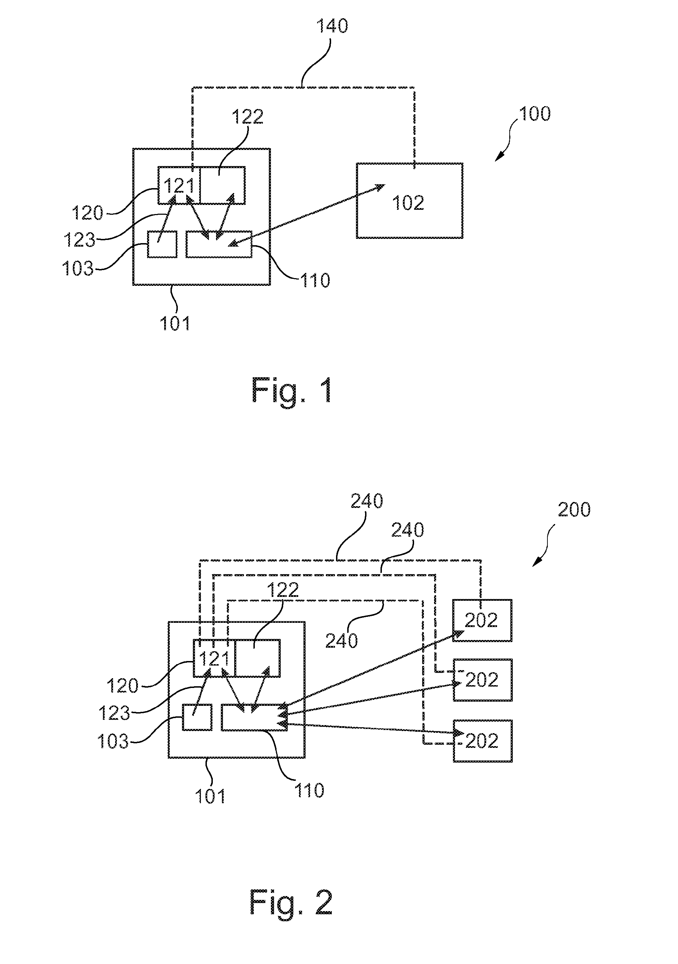

**Fig. 1** illustrates a data processing unit 101 within a data processing system 100 according to an exemplary embodiment of the invention.

Instead of implementing memory mapped control registers, a functionality of a co-processor 102 can be selected by a central processing unit (CPU) 103 by jumping to a dedicated location in the code address space 121 of the memory 120. Some bits of the address can be used to select a functionality, therefore a control register becomes obsolete. Some CPU registers 122 may be used to hand over parameters and return results in the same way as they are used by standard C-function calls.

The central processing unit 103 may be part of the data processing unit or may be the data processing unit. The CPU registers 122 may be integrated within the CPU 103, although shown as being separate parts.

The co-processor 102 can be implemented also as a memory mapped device, but instead of using the I/O-memory range it is mapped (140) into the code space. Now it can be "called" by jumping to a dedicated address as if at this address a standard C-function is located. Hardware, i.e. the monitoring unit 110, will observe this jump (123) and handle the function of the co-processor accordingly. Input parameters and return result can be ideally transferred in hardware directly to and from the CPU registers.

For example to call the "co-processor-function":

| | |
|---|---|
| LDR r3, [pc, #<offset>] | ; to get the address for the function, 2 bytes, 1 cycle |
| BL r3 | ; jump to the dedicated code location, 2 bytes, 1 cycle |

After these instructions, the next instructions may be fetched from the "co-processor" address. Here a dedicated hardware, i.e. the monitoring unit is triggered. It can
a) take the values from the CPU registers with the parameters using a dedicated hardware link
b) perform the calculation appropriately
c) return the result value into the CPU registers
c1) ideally by a hardware link into the CPU to have direct write access to the CPU registers or
c2) by executing instructions to read the value for the CPU registers from the code space, for example

| | |
|---|---|
| LDR r0, [pc,#10] | ; store 1st input word, 2 bytes, >=1 cycle |
| LDR r1, [pc,#14] | ; store 2nd input word, 2 bytes, >=1 cycle |

Finally, the monitoring unit gives back the opcode for a "return" to the CPU, for example

| | |
|---|---|
| BX lr | 2 bytes, 1 cycle |

As a result the co-processor operation looks from the CPUs point of view as a normal function call. In best case this only takes four bytes opcode to call the function. Execution is somewhat longer, as at least the "return" needs also to be executed.

The best case code sequence:

| | |
|---|---|
| LDR r3, [pc, #<offset>] | ; to get the address for the function, 2 bytes, 1 cycle |
| BL r3 | ; jump to the dedicated code location, 2 bytes, 1 cycle |
| BX lr | ; generated by hardware after the calculation has been performed, 2 bytes, 1 cycle |

The data processing unit according to this embodiment provides the advantages:
- code size reduced which is needed to execute a coprocessor call
- faster as some store instructions for the parameters are obsolete, instead the hardware can access values from several CPU registers in parallel
- possible to return the result directly into the CPU registers
- interfacing to the co-processor is as easy as calling a function in C (no dedicated instructions are needed what is e.g. for the MIPS 4KSc CPU a problem).

**Fig. 2** illustrates a data processing system 200 comprising the data processing unit 101 as described in Fig. 1. The data processing system 200 comprises further a plurality of co-processors 202. Functionalities of the co-processor are dedicated (240) to specific portions of the code address space 121. The system works the same way as the system described in Fig. 1, except that a plurality of co-processors can be called.

Such a data processing unit may be used for example for security controllers.

It should be noted that the term "comprising" does not exclude other elements or features and the "a" or "an" does not exclude a plurality. Also elements described in association with different embodiments may be combined.

It should also be noted that reference signs in the claims shall not be construed as limiting the scope of the claims.

## Claims

1. A data processing unit (101) for interacting with a co-processor (102), wherein the data processing unit is coupleable with the co-processor providing at least one functionality,
the data processing unit comprising
a memory (120) having at least a code address space (121), and
a monitoring unit (110) for monitoring a predefined portion of the code address space, wherein at least one address of the predefined portion of the code address space is dedicated to the at least one functionality,
wherein the data processing unit is adapted to use a jump instruction (123) to jump to the at least one address of the predefined portion of the code address space, and
wherein the monitoring unit is adapted to detect the jump to the at least one address of the predefined portion of the code address space and is further adapted to interact with the co-processor providing the at least one functionality.

2. The data processing unit (101) according to claim 1,
wherein a plurality of addresses of the predefined portion of the code address space (121) is dedicated to a plurality of functionalities being provided by the co-processor (102),
wherein the data processing unit is adapted to use a jump instruction (123) to jump to a specific address of the predefined portion of the code address space for starting a specific one of the plurality of functionalities.

3. The data processing unit (101) according to claim 1,
wherein the monitoring unit (110) is adapted to interact with the co-processor (102) by writing symbols to the memory (120) of the data processing unit and/or by loading symbols from the memory of the data processing unit and by forwarding symbols to the co-processor and/or by receiving symbols from the co-processor.

4. The data processing unit (101) according to claim 3,
wherein the symbols represent input parameters for the functionality of the co-processor (102) and/or result data received from the co-processor as results of the functionality.

5. The data processing unit (101) according to claim 1,
further comprising a register file (122), wherein the monitoring unit (110) is adapted to interact with the co-processor (102) by writing symbols to the register file of the data processing unit and/or by loading symbols from the register file of the data processing unit and by forwarding symbols to the co-processor and/or by receiving symbols from the co-processor.

6. The data processing unit (101) according to claim 5,
wherein the symbols represent input parameters for the functionality of the co-processor (102) and/or result data received from the co-processor as results of the functionality.

7. The data processing unit (101) according to claim 1,
further comprising a central processing unit (103) being coupled with the memory (120).

8. The data processing unit (101) according to claim 1,
being coupleable via data and address buses to the co-processor (102).

9. A data processing system (100), comprising
a data processing unit (101) according to claim 1, and
a co-processor (102) being coupleable to the data processing unit.

10. A method of interacting between a data processing unit and a co-processor,
wherein the data processing unit is coupable with the co-processor providing at least one functionality,
the method comprising,
monitoring, by a monitoring unit, a predefined portion of a code address space of a memory of the data processing unit, wherein at least one address of the predefined portion of the code address space is dedicated to the at least one functionality,
using a jump instruction to jump to the at least one address of the predefined portion of the code address space,
detecting, by the monitoring unit, the jump to the at least one address of the predefined portion of the code address space, and
interacting with the co-processor providing the at least one functionality.

11. A computer-readable medium, in which a computer program is stored, which computer program, when being executed by a processor, is adapted to carry out or control a method according to claim 10.

12. A program element, which program element, when being executed by a processor, is adapted to carry out or control a method according to claim 10.
